# EUROPÄISCHE PATENTSCHRIFT

(11) **EP 3 441 172 B1**
(45) Veröffentlichungstag und Bekanntmachung des Hinweises auf die Patenterteilung: **08.04.2026**
(21) Anmeldenummer: 18000635.5
(22) Anmeldetag: 30.07.2018
(51) Int. Cl.: B23Q 15/013, B23Q 17/09, B23D 59/00

(54) **VERFAHREN ZUM AUFTRENNEN LÄNGLICHER WERKSTÜCKE SOWIE BEARBEITUNGSMASCHINE ZUR DURCHFÜHRUNG EINES SOLCHEN VERFAHRENS**
METHOD FOR CUTTING ELONGATED WORKPIECES AND A CUTTING MACHINE FOR CARRYING OUT SUCH A METHOD
PROCÉDÉ DE SÉPARATION DE PIÈCES ALLONGÉES AINSI QUE MACHINE DE SÉPARATION PERMETTANT LA MISE EN OEUVRE D'UN TEL PROCÉDÉ

(30) Priorität: 10.08.2017 DE 102017007605
(43) Veröffentlichungstag der Anmeldung: 13.02.2019
(73) Patentinhaber: Michael Weinig AG, 97941 Tauberbischofsheim (DE)
(72) Erfinder: Dawidziak, Albrecht, 97950 Großrinderfeld (DE); Weisenseel, Klaus, 74744 Ahorn-Berolzheim (DE); Burger, Christian, 97941 Tauberbischofsheim (DE)
(74) Vertreter: Kohl, Karl-Heinz

(56) Entgegenhaltungen:
- EP-A1- 2 845 674
- EP-A2- 1 927 829
- US-A- 4 644 832

## Beschreibung

Die Erfindung betrifft ein Verfahren zum Auftrennen länglicher Werkstücke nach dem Oberbegriff des Anspruches 1 sowie eine Bearbeitungsmaschine zur Durchführung eines solchen Verfahrens nach dem Oberbegriff des Anspruches 11.

Es ist bekannt, längliche Werkstücke in dünne Lamellen mit Hilfe von dünnen Kreissägeblättern aufzutrennen. Die Kreissägeblätter sitzen mit geringem Abstand übereinander auf einer drehbar angetriebenen Spindel. Die Werkstücke, insbesondere wenn sie aus Holz oder holzähnlichen Werkstoffen bestehen, weisen häufig Fehler, wie Äste und dergleichen, auf, die dazu führen können, dass die Kreissägeblätter aufgrund eines erhöhten Schnittdruckes sich verformen oder gar zerstört werden. Eine Verformung der Kreissägeblätter führt zu einer schlechteren Qualität der herausgetrennten Lamellen, weil die Verformung der Kreissägeblätter zu einem entsprechenden Schnittversatz führt.

Die Kreissägeblätter des Sägepaketes erzeugen einen bestimmten Schallpegel, der sehr hoch wird, wenn die Kreissägeblätter sich beispielsweise verformen oder aufschwingen. Diese höhere Lärmentwicklung veranlasst den Benutzer einer Sägeeinrichtung, den Vorschub des Werkstückes anzuhalten, das Werkstück zurückzubewegen, so dass die Kreissägeblätter wieder vom Werkstück frei kommen (EP 2 845 674 A). Eine solche Verfahrensweise ist allerdings sehr aufwändig und auch nicht zuverlässig. Sollte der Anwender den erhöhten Schallpegel nicht hören oder auch nicht erkennen, besteht die Gefahr, dass das Sägepaket beschädigt wird und damit ausfällt.

Es ist daher auch schon vorgeschlagen worden, den Vorschub des Werkstückes automatisch dann anzuhalten, wenn der Schallpegel einen zulässigen Wert überschreitet. Auch eine solche Verfahrensweise ist wenig effektiv, weil auch dann das Werkstück zurückgezogen werden muss, um die Kreissägeblätter freizubekommen.

Es ist ferner bekannt (EP 1 927 829 A2), mit einer Sensoreinheit Schallwellen zu erfassen, die bei der Bearbeitung eines Werkstückes erzeugt werden.

Es sind weiter Verfahren bekannt (US 4 644 832 A), bei denen Querbewegungen eines Kreissägeblattes beim Sägevorgang erfasst werden. Die Querbewegungen werden in Signale umgesetzt, die mit gespeicherten Signalwerten verglichen werden. In Abhängigkeit von diesem Vergleich wird die Drehgeschwindigkeit des Kreissägeblattes geregelt.

Der Erfindung liegt die Aufgabe zugrunde, das gattungsgemäße Verfahren und die gattungsgemäße Bearbeitungsmaschine so auszubilden, dass die Werkstücke in zuverlässiger Weise und bei hoher Maschinenleistung einwandfrei in dünne Lamellen aufgeteilt werden können.

Diese Aufgabe wird beim gattungsgemäßen Verfahren erfindungsgemäß mit den kennzeichnenden Merkmalen des Anspruches 1 und bei der gattungsgemäßen Bearbeitungsmaschine erfindungsgemäß mit den kennzeichnenden Merkmalen des Anspruches 11 gelöst.

Beim erfindungsgemäßen Verfahren wird der Schallpegel beim Drehen des Kreissägeblattes und während des Sägevorganges überwacht. Die Schallpegelwerte werden der Auswerteelektronik zugeführt. Sollte das Kreissägeblatt einem erhöhten Schnittdruck ausgesetzt sein, erhöht sich der Schallpegel des Kreissägeblattes. Anhand der gespeicherten Erfahrungswerte wird die für den jeweils durchzuführenden Sägevorgang prozesssichere Vorschubgeschwindigkeit ermittelt und ausgewählt. Unter einer prozesssicheren Vorschubgeschwindigkeit ist zu verstehen, dass beim Sägevorgang der Schallpegel unterhalb eines kritischen Grenzwertes bleibt. Wird dieser kritische Schallpegelwert erreicht oder nähert er sich diesem Grenzwert, wird die Vorschubgeschwindigkeit des Werkstückes verringert. Dann nimmt der auf das Kreissägeblatt wirkende Schnittdruck ab, was zur Folge hat, dass eine eventuelle Verformung oder ein Aufschwingen bzw. Verlaufen des Kreissägeblattes wieder aufgehoben wird. Dies äußert sich in einer Abnahme des aktuellen Schallpegelwertes, der von der Auswerteelektronik dazu genutzt wird, die Vorschubgeschwindigkeit des Werkstückes wieder so zu erhöhen, dass der aktuelle Schallpegelwert im zulässigen Bereich liegt. Sobald der Istwert des Schallpegels unter den vorgegebenen Grenzwert-Schallpegel fällt, wird die Vorschubgeschwindigkeit des Werkstückes wieder erhöht.

Vorteilhaft ist die prozesssichere Vorschubgeschwindigkeit die optimale Vorschubgeschwindigkeit, so dass die Maschine zur Durchführung des Verfahrens eine hohe Leistung hat.

Mit dem erfindungsgemäßen Verfahren ist es möglich, die Werkstücke im Durchlaufverfahren in dünne Lamellen aufzusägen, selbst wenn zeitweise ein erhöhter Schnittdruck, beispielsweise aufgrund von Fehlern innerhalb des Werkstückes, auftreten sollte.

Im einfachsten Fall wird die Vorschubgeschwindigkeit bei Erreichen des Grenzwertes des Schallpegels verringert. In diesem Falle ist es vorteilhaft, wenn dieser Grenzwert aus Sicherheitsgründen etwas niedriger festgelegt wird, als er bei maximaler Ausnutzung festgelegt werden könnte.

Die gespeicherten Erfahrungswerte sind vorteilhaft die Vorschubgeschwindigkeit und/oder die Kreissägeblatt-Dicke und/oder der Schallpegel. Mit diesen gespeicherten Erkennungsdaten kann die optimale Vorschubgeschwindigkeit ermittelt und gewählt werden.

Vorteilhaft können als weitere Erfahrungswerte Daten über die Werkstückart und/oder die Werkstückdicke und/oder die Zähnezahl des Kreissägeblattes und/oder die Drehzahl des Kreissägeblattes herangezogen werden. Dadurch ist es beispielsweise möglich, die optimale Vorschubgeschwindigkeit im Hinblick auf die Art des aufzusägenden Werkstückes zu wählen. Die werkstückbezogenen Erfahrungswerte können hierbei mit werkzeugbezogenen Daten in Beziehung gesetzt werden, so dass die unterschiedlichsten Kreissägeblätter optimal so auf die unterschiedlichsten Werkstücke abgestimmt werden können, dass beim Sägevorgang eine unzulässige Überlastung des Kreissägeblattes nicht zu befürchten ist.

Bei einer vorteilhaften Verfahrensweise wird zunächst der Referenzwert des Schallpegels ermittelt, von dem ausgehend der Schallpegel-Grenzwert festgelegt wird.

Zur Ermittlung des Referenzwertes wird ein neues Kreissägeblatt eingesetzt, mit dem bei einer normalen Produktion Standardwerkstücke über eine definierte Zeitspanne gesägt werden. Vorteilhaft ist hierbei, wenn die Aufzeichnung des Schallpegels erst nach einer kurzen Produktionsdauer begonnen wird. Dann hat das Kreissägeblatt seine Arbeitsschärfe. Ein noch nicht zur Werkstückbearbeitung herangezogenes Kreissägeblatt weist eine Überschärfe auf, die nicht charakteristisch ist für ein in Betrieb genommenes Kreissägeblatt. Gleiches gilt auch, wenn das Kreissägeblatt neu geschärft worden ist. Auch dann hat es eine Überschärfe. Darum ist auch in diesem Falle zweckmäßig, das neu geschärfte Kreissägeblatt zunächst kurz einzusetzen, bevor die Schallpegelwerte aufgenommen werden.

Zusätzlich zur oder an Stelle der Verringerung der Vorschubgeschwindigkeit des Werkstückes ist es auch möglich, die Drehzahl des Kreissägeblattes zu verändern, wenn der gemessene Schallpegelwert den Grenzwert des Schallpegels erreicht. Problematisch können beispielsweise Eigenfrequenzen sein, die bei der Werkstückbearbeitung angeregt werden. Dann kann durch kombinative Veränderung (Erhöhung oder Verringerung) der Drehzahl des Kreissägeblattes und Verringerung der Vorschubgeschwindigkeit des Werkstückes die Bearbeitung im optimalen Arbeitsbereich erfolgen.

Der Referenzwert und der Grenzwert des Schallpegels sind vorteilhaft in einem Speicher der Auswerteeinheit bzw. einer Steuerung abgelegt, so dass sie bei späteren Anwendungen beim Einsatz des gleichen Kreissägeblattes und gleichartiger Werkstücke abgerufen werden können.

Die Vorschubgeschwindigkeit der Werkstücke und/oder die Drehzahl des Kreissägeblattes können stufenlos oder auch schrittweise veränderbar sein. Die stufenlose Verstellung der Vorschubgeschwindigkeit bzw. der Drehzahl hat den Vorteil, dass eine Verringerung dieser Werte nur in dem Maße erfolgen kann, wie es erforderlich ist.

Bei einer schrittweisen Veränderung sind die entsprechenden Abstufungen bei der Verringerung der Vorschubgeschwindigkeit bzw. Veränderung der Drehzahl entsprechend größer. Aus diesem Grunde ist es vorteilhaft, die Schrittweite entsprechend klein zu halten.

Bei einer bevorzugten Ausbildung wird der Referenzwert des Schallpegels des Kreissägeblattes automatisch ermittelt und abgespeichert.

Ebenso ist es vorteilhaft, wenn die Vorschubgeschwindigkeit der Werkstücke automatisch verändert wird. Dann kann die Bearbeitung der Werkstücke auch ohne Bedienperson vorgenommen werden.

Ebenso ist es von Vorteil, wenn der Grenzwert des Schallpegels in Abhängigkeit vom Referenzwert automatisch ermittelt wird. Dann kann das Verfahren auch von weniger geübten Arbeitskräften durchgeführt werden.

Vorteilhaft ist es, wenn ein weiterer Grenzwert zur Aktivierung einer Warnmeldung verwendet wird. Die Warnmeldung kann ein akustisches und/oder optisches Signal sein, das dem Anwender des Verfahrens einen Hinweis gibt, beispielsweise den Verfahrensprozess zu prüfen oder zu beobachten oder den Verschleiß der Kreissägeblätter zu überprüfen.

Die erfindungsgemäße Bearbeitungsmaschine zeichnet sich dadurch aus, dass sie mit dem wenigstens einen Schallaufnehmer versehen ist, der im Schallbereich des Kreissägeblattes angeordnet ist und den Schallpegel des Kreissägeblattes aufnimmt. Der Schallaufnehmer sendet seine aufgenommenen Schallpegelsignale an die Auswerteeinheit, welche diese Signale auswertet und dazu heranzieht, im Bedarfsfall die Vorschubgeschwindigkeit der Werkstücke zu verändern.

Der Schallaufnehmer kann die Schallpegelsignale in vorteilhafter Weise ohne Zwischenschaltung eines Bandpassfilters an die Auswerteeinheit senden.

Im Speicher der Bearbeitungsmaschine sind Erfahrungswerte abgelegt. Die Erfahrungswerte betreffen zumindest die Vorschubgeschwindigkeit der Werkstücke und die Grenzwerte des Schallpegels. Die Auswerteeinheit oder die Steuerung können auf die im Speicher abgelegten Erfahrungswerte zugreifen und daraus die prozesssichere, vorteilhaft die optimale Vorschubgeschwindigkeit wählen und bestimmen. Die Vorschubgeschwindigkeiten und die Schallpegel-Grenzwerte sind für unterschiedlichste Arten von Kreissägeblättern, Werkstücken und dergleichen abgelegt. Dadurch kann jede Art von Werkstück mit jeder Art von Kreissägeblättern im optimalen Arbeitsbereich bearbeitet werden.

Die Auswerteeinheit ist Teil einer Steuerung der Bearbeitungsmaschine.

Die Bearbeitungsmaschine ist in vorteilhafter Weise eine Kehlmaschine, mit der die Werkstücke, bevor sie dem Kreissägeblatt zugeführt werden, im Durchlaufverfahren an vier Seiten mit dem oberen und unteren horizontalen Bearbeitungswerkzeug sowie mit dem rechten und dem linken vertikalen Bearbeitungswerkzeug bearbeitet werden. Die Werkstücke gelangen somit erst dann zum Kreissägeblatt, wenn sie an ihren vier Seiten bereits bearbeitet worden sind.

Das Kreissägeblatt befindet sich vorteilhaft in Transportrichtung der Werkstücke hinter dem letzten Bearbeitungswerkzeug noch innerhalb der Kehlmaschine. Dadurch treten aus der Kehlmaschine die herausgesägten dünnen Lamellen aus. Der Schallaufnehmer sowie die Auswerteeinheit können nachträglich an bereits bestehenden Kehlmaschinen vorgesehen werden.

Vorteilhaft ist es, wenn im Datenspeicher weitere Prozess- und Bearbeitungsparameter abgelegt sind.

Zum Auftrennen der Werkstücke reicht grundsätzlich ein Kreissägeblatt aus. Vorteilhaft ist es jedoch, wenn das Kreissägeblatt Teil wenigstens eines Kreissägepaketes ist. Mit einem solchen Kreissägepaket kann das Werkstück in mehrere dünne Lamellen aufgeteilt werden, abhängig von der Zahl der Kreissägeblätter im Kreissägepaket.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in vereinfachter und perspektivischer Darstellung eine erfindungsgemäße Bearbeitungsmaschine,
- Fig. 2: in vergrößerter Darstellung eine Sägeeinrichtung der Bearbeitungsmaschine gemäß Fig. 1.

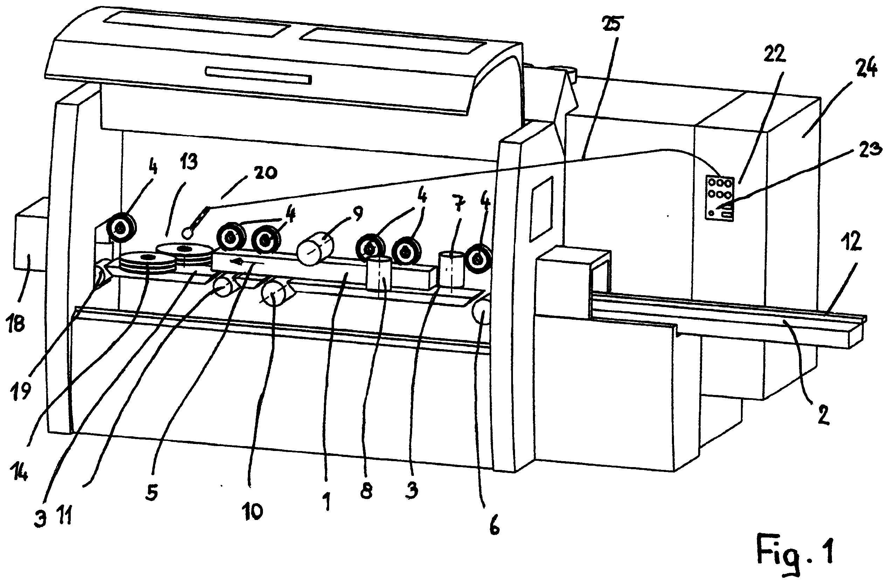

Fig. 1 zeigt als Beispiel einer Bearbeitungsmaschine eine Kehlmaschine, mit der Werkstücke 1 bei ihrem Durchlauf durch die Maschine an vier Seiten bearbeitet werden können. Die Werkstücke 1 bestehen vorzugsweise aus Holz, können aber auch aus holzähnlichen Werkstoffen, aus Kunststoff und dergleichen bestehen. Die länglichen Werkstücke 1 haben viereckigen Umriss und werden bei ihrem Durchlauf durch die Kehlmaschine an allen vier Längsseiten bearbeitet.

Die Werkstücke 1 werden über einen Einlauftisch 2 einem Maschinentisch 3 zugeführt, auf dem die Werkstücke 1 durch die Kehlmaschine aufliegend transportiert werden. Zum Transport der Werkstücke 1 sind Transportwalzen 4 vorgesehen, die um ihre Achsen drehbar angetrieben werden und unter Druck auf der Oberseite der Werkstücke 1 aufliegen. Die Werkstücke 1 werden in Richtung des Pfeiles 5 durch die Kehlmaschine transportiert.

Das in die Kehlmaschine eintretende Werkstück 1 wird zunächst an seiner Unterseite mit einem unteren Werkzeug 6 bearbeitet, das um eine horizontale Achse drehbar ist. In Transportrichtung 5 hinter dem unteren Werkzeug 6 befindet sich in der Kehlmaschine ein rechtes Werkzeug 7, das um eine vertikale Achse drehbar angetrieben ist und mit dem die in Transportrichtung 5 rechte Längsseite des Werkstückes 1 beim Durchlauf bearbeitet wird. Die gegenüberliegende linke Längsseite des Werkstückes 1 wird von einem linken, um eine vertikale Achse drehbar angetriebenen Werkzeug 8 beim Durchlauf bearbeitet. Das linke Werkzeug 8 liegt vorteilhaft in Transportrichtung 5 hinter dem rechten Werkzeug 7.

In Transportrichtung 5 hinter dem linken Werkzeug 7 ist ein oberes Werkzeug 9 vorgesehen, das um eine horizontale Achse drehbar angetrieben wird und mit dem die Oberseite des Werkstückes 1 bei dessen Durchlauf durch die Kehlmaschine bearbeitet wird.

In Transportrichtung 5 hinter dem oberen Werkzeug 9 hat die Kehlmaschine ein unteres Werkzeug 10, das um eine horizontale Achse drehbar angetrieben ist und mit dem die Unterseite des Werkstückes 1 nochmals bearbeitet wird.

Je nach Anwendungsfall kann die Kehlmaschine weitere rechte, linke, obere oder untere Spindeln, die entsprechende Werkzeuge tragen, aufweisen.

Im Ausführungsbeispiel ist die Kehlmaschine noch mit einer unteren Tischwalze 11 versehen, die um eine horizontale Achse drehbar ist und in Transportrichtung 5 hinter dem unteren Werkzeug 10 vorgesehen ist.

Damit die unteren Werkzeuge 6, 10 die Unterseite des Werkstückes 1 bearbeiten können, ist der Maschinentisch 3 im Bereich dieser Werkzeuge 6, 10 unterbrochen.

Zur Einstellung einer Spanabnahme an dem rechten Werkzeug 7 liegt das Werkstück 1 bei der Zuführung in die Kehlmaschine mit seiner in Transportrichtung 5 rechten Längsseite an einem in Transportrichtung 5 sich erstreckenden Fügelineal 12 an. Es erstreckt sich vom Einlauftisch 2 aus in die Kehlmaschine bis zum rechten Werkzeug 7. Um die genaue Ausrichtung des Werkstückes 1 beim Durchlauf durch die Kehlmaschine sicherzustellen, liegt das Werkstück 1, nachdem es vom rechten Werkzeug 7 bearbeitet worden ist, mit seiner rechten Längsseite an einem in den Figuren durch das Werkstück 1 verdeckten Anschlag an.

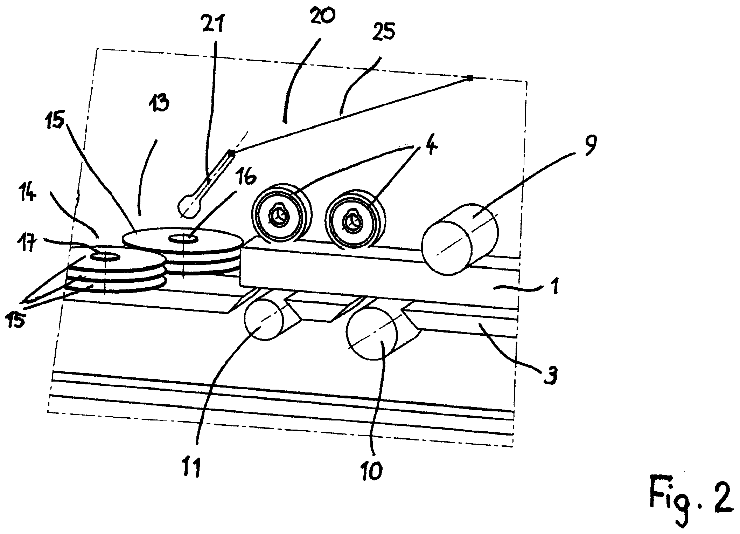

Im Anschluss an die Vierseitenbearbeitung des Werkstückes 1 befinden sich in der Kehlmaschine zwei nebeneinander liegende Sägepakete 13 und 14, die um vertikale Achsen drehbar angetrieben sind. Jedes Sägepaket 13, 14 besteht aus übereinander liegenden Kreissägeblättern 15 (Fig. 2), die mit Abstand übereinander auf einer vertikalen Spindel 16, 17 sitzen. Mit den Kreissägeblättern 15 wird das Werkstück 1 im Anschluss an die Oberflächenbearbeitung in dünne Lamellen aufgeteilt. Die drehbar angetriebenen Spindeln 16, 17 befinden sich seitlich neben dem durch die Maschine durchlaufenden Werkstück 1. Die Kreissägeblätter 15 der beiden Sägepakete 13, 14 sind so zueinander angeordnet, dass das Werkstück 1 über seine Breite in die dünnen Lamellen aufgetrennt wird. Die Kreissägeblätter 15 der beiden Sägepakete 13, 14 liegen jeweils auf gleicher Höhe.

Am Auslass 18 der Kehlmaschine treten die dünnen Lamellen aus. Damit die Lamellen zuverlässig aus der Kehlmaschine herausgeführt werden können, befindet sich in Höhe des Auslasses 18 wenigstens eine horizontale Tischwalze 19, die in Transportrichtung 5 hinter den Sägepaketen 13, 14 vorgesehen ist und die dünnen Lamellen bei ihrem Austritt aus der Kehlmaschine abstützt. Etwa in Höhe der Tischwalze 19 ist wenigstens eine weitere Transportwalze 4 vorgesehen ist, mit der das Lamellenpaket transportiert wird.

Um Schäden beim Aufsägen der Werkstücke 1 frühzeitig zu erkennen, ist die Bearbeitungsmaschine mit einer Überwachungseinrichtung 20 versehen, die wenigstens ein Mikrofon 21 aufweist, das an eine Steuerung 22 angeschlossen ist. Mit Hilfe eines Bedienpanels 23 an einem Schaltschrank 24 der Bearbeitungsmaschine kann die Steuerung 22 bedient werden.

Die Verbindung zwischen dem Mikrofon 21 und der Steuerung 22 kann drahtgebunden oder drahtlos erfolgen. In den Zeichnungen ist diese Verbindung durch die Linie 25 symbolisch dargestellt.

Das Mikrofon 21 ist in geeigneter Weise in der Bearbeitungsmaschine gehalten und so angeordnet, dass es den von den Sägepaketen 13, 14 erzeugten Schall beim Durchsägen der Werkstücke 1 aufnehmen kann. Das Mikrofon 21 befindet sich vorteilhaft in unmittelbarer Nähe der Sägepakete 13, 14, so dass eine zuverlässige Schallmessung möglich ist. Die Steuerung 22 enthält eine Auswerteeinheit, um den mit dem Mikrofon 21 aufgenommenen Schall auswerten zu können. Diese Auswerteeinheit ist vorteilhaft in die Maschinensteuerung 22 eingebunden. Grundsätzlich besteht aber auch die Möglichkeit, die Auswerteeinheit als eigenständige Einheit vorzusehen, die Signale an die Steuerung liefert.

Mit der Überwachungseinrichtung 20 wird die Bearbeitung des Werkstückes 1 durch die Sägepakete 13, 14 mittels des Lärmpegels der Sägepakete 13, 14 überwacht. Wird ein vorgegebener Schallpegel überschritten, dann ist dies ein Hinweis darauf, dass die Kreissägeblätter 15 beispielsweise einen zu hohen Verschleiß aufweisen, der Schnittdruck beispielsweise in Folge von Fehlern im Werkstück 1 zu hoch ist, wobei sich die Sägeblätter aufschwingen oder verlaufen, sich die Kreissägeblätter 15 im Werkstück 1 so verklemmt haben, dass ein sauberer Schnitt nicht mehr möglich ist bzw. dass die Gefahr besteht, dass das jeweilige Kreissägeblatt 15 bricht. Vorzugsweise wird eine automatische Anpassung der Vorschubgeschwindigkeit in Abhängigkeit vom Lärmpegel vorgenommen.

Zunächst wird bei Beginn einer neuen Produktion oder bei Einsatz eines neuen Sägepaketes 13, 14 der Schallpegel beim Durchsägen eines Werkstückes 1 aufgenommen. Vorzugsweise werden hierfür Werkstücke aus der zu bearbeitenden Produktionscharge verwendet, die das durchschnittliche Qualitätsspektrum abdecken. Der ermittelte Schallpegelwert dient als Referenzwert für die Festlegung eines Grenzwertes des Schallpegels, bei dessen Erreichen die Vorschubgeschwindigkeit Vₛ des Werkstückes 1 verringert bzw. der Vorschub abgeschaltet wird.

Der Referenzwert sowie der Grenzwert werden zusammen mit den Prozessdaten, wie Bearbeitungs-, Werkstück- und Werkzeugparametern, die Einfluss auf den Schallpegelwert haben können, in einem Speicher oder einer Datenbank der Auswerteeinheit oder der Steuerung als Erfahrungswerte abgelegt. Solche Parameter sind beispielsweise Vorschubgeschwindigkeit, Werkzeugdrehzahlen, Holzart, Holzdicke, Schnitttiefe beim Einsägen bzw. Durchsägen, Anzahl der Sägeschnitte bzw. Sägeblätter, Sägeblattdurchmesser, Sägeblattdicke, Zähnezahl und Zahnform. Einfluss auf den Schallpegelwert können auch der Einsatz von Sägeblättern mit Räumern, von Spaltkeilen, die ein Nachschneiden vermeiden, oder von Sprüh- bzw. Schmiermedien haben, weshalb vorteilhaft auch dazu entsprechende Informationen mit abgespeichert werden.

Die Datenbank kann auch maschinenfern in Form einer Cloud-Lösung realisiert sein, an welche die Maschine die Daten weitergibt und von der sie Referenz- und Grenzwerte erhält.

Diese Daten werden durch Messungen vorteilhaft bei den verschiedenen Bearbeitungsaufgaben und für die verschiedenen Arten von Werkstücken und Sägepaketen ermittelt.

Sind die Sägepakete 13, 14 mit unterschiedlich dicken und/oder großen Kreissägeblättern 15 versehen, dann erfolgen die Messungen auch im Hinblick auf die verschiedenen Kreissägeblätter. Alle Messwerte werden im Speicher bzw. der Datenbank abgelegt. Die Datenbank ermöglicht es, Grenzwerte für neue Bearbeitungsaufgaben bereitzustellen.

Auf diese Weise kann die Auftrennung der Werkstücke 1 (optimale Vorschubgeschwindigkeit, Schallpegelgrenzwerte) in Abhängigkeit von den verwendeten Sägepaketen 13, 14 bzw. ihrer Kreissägeblätter 15 und/oder dem Material, aus dem die Werkstücke 1 bestehen, festgelegt werden.

Es lassen sich damit die optimalen Prozessparameter für die jeweilige Bearbeitungsaufgabe finden und festlegen.

Werden die Werkstücke 1 nach ihrer Vierseiten-Bearbeitung mit den beiden Sägepaketen 13, 14 in dünne Lamellen aufgesägt, dann wird mittels des Mikrofons 21 der hierbei entstehende Schallpegel aufgenommen. Die erfassten Schallpegelwerte werden der Auswerteeinheit zugeführt, die die aufgenommenen Ist-Werte des Schallpegels mit dem jeweils gespeicherten Grenzwert vergleicht. Solange der Istwert des Schallpegels unterhalb des Grenzwertes des Schallpegels liegt, können die Werkstücke 1 mit ihrer optimalen Vorschubgeschwindigkeit Vₛ transportiert und hierbei in die dünnen Lamellen aufgesägt werden.

Sollte der Schallpegel beim Sägevorgang den Grenzwert des Schallpegels erreichen, dann sendet die Auswerteeinheit bzw. die Steuerung ein Signal an den oder die Vorschubantriebe für das Werkstück 1, um die Vorschubgeschwindigkeit Vₛ zu verringern. Dies wiederum hat zur Folge, dass der Schnittdruck, der auf die Kreissägeblätter 15 wirkt, verringert wird und damit der von den Sägepaketen 13, 14 erzeugte Schallpegel abnimmt. Sobald der Istwert des Schallpegels unter den vorgegebenen Grenzwert-Schallpegel fällt, wird die Vorschubgeschwindigkeit Vₛ des Werkstückes wieder erhöht.

Sollte sich trotz Verringerung der Vorschubgeschwindigkeit Vₛ des Werkstückes 1 der Schallpegel nicht verringern, kann die Auswerteeinheit so ausgebildet sein, dass sie ein Warnsignal erzeugt und/oder den Vorschub für das Werkstück 1 abschaltet.

Damit die Vorschubgeschwindigkeit nicht bei einem nur kurzzeitigen Überschreiten des Grenzwertes verringert wird, ist die Auswerteeinheit vorteilhaft so ausgebildet, dass der Schallpegel über eine vorbestimmte Zeit über dem Grenzwert liegen muss.

Wird mit Verringerung der Vorschubgeschwindigkeit Vₛ der Schallpegel verringert, dann ist es vorteilhaft, die Vorschubgeschwindigkeit nicht gleich nach Unterschreiten des Schallpegel-Grenzwertes wieder zu erhöhen, sondern eine vorgegebene Zeit abzuwarten, ob der Schallpegel der Sägepakete 13, 14 während dieses Zeitraumes unterhalb des Grenzwertes bleibt.

Bei einer vorteilhaften Ausbildung wird die Vorschubgeschwindigkeit Vₛ der Werkstücke 1 stufenlos verstellt.

Die Auswerteelektronik kann auch so ausgestaltet sein, dass die Vorschubgeschwindigkeit Vₛ in Schritten verringert bzw. erhöht wird.

Die Auswerteelektronik ist vorteilhaft so vorgesehen, dass die Überwachung und die Einstellung der Vorschubgeschwindigkeit Vₛ der Werkstücke 1 automatisch vorgenommen wird. In diesem Fall ist eine mannlose Produktion der dünnen Lamellen möglich.

Da der Schallpegel der Sägepakete 13, 14 überwacht wird, können sehr dünne Kreissägeblätter 15 eingesetzt werden, die in der Regel anfälliger dafür sind, zerstört zu werden. Der Einsatz solcher dünner Kreissägeblätter 15 führt zu einer erheblichen Materialeinsparung, da mit den dünnen Kreissägeblättern 15 mehr Lamellen aus dem Werkstück 1 herausgesägt werden können als mit dickeren Kreissägeblättern.

Aufgrund der Schallpegelerfassung während des Sägevorganges lassen sich Schäden an den Kreissägeblättern 15 bzw. an den Sägepaketen 13, 14 sowie auch an der Bearbeitungsmaschine verhindern. Aufgrund der beschriebenen Schallpegelüberwachung können die dünnen Lamellen mit einer sehr hohen maßlichen Qualität hergestellt werden. Darüber hinaus führt die Überwachung des Schallpegels in Verbindung mit der Einstellung der Vorschubgeschwindigkeit Vₛ der Werkstücke 1 zu einer hohen Standzeit der Sägepakete 13, 14. Dies wiederum führt zu einer Erhöhung der Verfügbarkeit der Bearbeitungsmaschine bzw. der entsprechenden Anlage.

Mit der beschriebenen Schallpegelerfassung lässt sich auch der Verschleißzustand der Sägepakete 13, 14 zuverlässig erfassen. Mit zunehmendem Verschleiß der Kreissägeblätter 15 der Sägepakete 13, 14 nimmt der Grundschallpegel zu. Wenn sich der Schallpegel der Sägepakete 13, 14 dem Grenzwert des Schallpegels nähert, ist ein Austauschen der Sägepakete 13, 14, eventuell auch nur einzelner Kreissägeblätter 15 der Sägepakete 13, 14, angebracht. Dadurch ist eine optimale Ausnutzung der Lebensdauer der Sägepakete 13, 14 möglich.

Vorteilhaft kann hierzu ein weiterer, zweiter Grenzwert für eine Warnmeldung oder Warnanzeige genutzt werden. Dieser liegt unterhalb des Überwachungsgrenzwertes für den Vorschub. Die Warnmeldung kann den Bediener auch darauf aufmerksam machen, dass sich etwas an dem Prozess verändert hat, was es zum Beispiel erforderlich macht, diesen genauer zu beobachten oder eben den Verschleiß der Werkzeuge zu kontrollieren.

Außerdem besteht die Möglichkeit, die Sägepakete 13, 14 nicht über die maximal mögliche Lebensdauer einzusetzen, sondern Wechselintervalle für die Sägepakete 13, 14 vorzusehen, die aufgrund der Schallpegelüberwachung optimal lang gewählt werden können.

Durch das Zusammenspiel von Schallpegel und Vorschubgeschwindigkeit der Werkstücke kann mit den Sägepaketen 13, 14 im optimalen Arbeitsbereich gearbeitet werden.

Die Schallpegelüberwachung mit der Auswerteeinheit und der Steuerung bzw. Regelung der Vorschubantriebe der Maschine kann in bereits vorhandene Maschinen nachträglich eingebaut werden, so dass auch solche Bearbeitungsmaschinen die beschriebenen Vorteile beim Sägen nutzen können.

Vorteilhaft ist es, wenn der Referenzwert des Schallpegels automatisch nach Einschalten der Bearbeitungsmaschine ermittelt wird. Ein manueller Eingriff durch den Benutzer ist nicht notwendig. Eine solche Ausbildung hat den Vorteil, dass bei einem Auswechseln der Sägepakete 13, 14 der Referenz-Schallpegelwert selbständig ermittelt wird. Vorteilhaft startet die Messung erst dann, wenn neu geschärfte Werkzeuge ihre Arbeitsschärfe erreicht haben, das heißt nicht sofort mit Produktionsbeginn, sondern nach einigen Laufmetern.

Weiter ist die Auswerteeinheit vorteilhaft so gestaltet, dass der Anwender der Bearbeitungsmaschine vor dem eigentlichen Produktionsstart noch eine Korrektur der Referenzwerte vornehmen kann. Dadurch besteht für den Anwender die Möglichkeit, eine iterative Annäherung an den optimalen Referenzwert des Schallpegels vorzunehmen.

Die vom Mikrofon 21 gemessenen Schallpegelwerte können analog oder über ein Bussystem der Auswerteeinheit übergeben werden. Die Überwachungseinrichtung kann mit handelsüblichen Standardkomponenten aus Mikrofon und Auswerteeinheit realisiert werden und bedarf keiner besonderer Anpassungen oder Zusatzkomponenten, wie z.B. Bandpassfilter o.Ä.

Die Auswerteeinheit, Steuerung oder Datenbankanwendung kann den Schallpegelwert mit weiteren Prozessparametern verknüpfen, die gespeichert sind. Als solche Prozessparameter kommen, wie bereits beschrieben, Parameter bezüglich der Bearbeitung (Vorschubgeschwindigkeit, Drehzahl der Sägepakete 13, 14, Schnitttiefe, Einsägen oder Durchsägen, Einsatz von Spaltkeilen oder Schmiermedien), des Werkzeuges (Durchmesser, Dicke und Anzahl der Kreissägeblätter 15, Zähnezahl, Zahnform, Einsatz von Räumern) und des Werkstücks 1 (Werkstückart, Material, Dicke, Feuchte) in Betracht.

Diese Parameter nehmen Einfluss auf die Höhe des Schallpegels, ggf. neben Weiteren, nicht Genannten. Wenn daher diese Prozess- und Bearbeitungsparameter abgespeichert sind, kann die Maschinensteuerung oder Auswerteeinheit den gemessenen Schallpegelwert mit einem oder mehreren dieser Parameter in Beziehung setzen und so die optimale Vorschubgeschwindigkeit Vₛ des Werkstückes 1 einstellen bzw. vorgeben. Bereits im Vorfeld der Produktion lassen sich Aussagen über den optimalen Prozess treffen.

Vorteilhaft ist es, bei Überschreiten des Grenzwertes des Schallpegels nicht nur die Vorschubgeschwindigkeit Vₛ zu verringern, sondern zusätzlich auch die Drehzahl der Sägepakete 13, 14 zu verändern. Auf diese Weise wird es möglich, durch Abstimmung des Maßes der Verringerung der Vorschubgeschwindigkeit Vₛ und/oder der Änderung der Drehzahl unzulässige Schwingungen und eine Beschädigung der Kreissägeblätter 15 und/oder des Werkstückes 1 zu vermeiden.

Die beschriebene Ausbildung und Vorgehensweise ist auch dann möglich, wenn nur ein einzelnes Kreissägeblatt eingesetzt wird.

## Patentansprüche

1. Verfahren zum Auftrennen länglicher Werkstücke (1), die aus Holz, Kunststoff und dergleichen bestehen, mittels wenigstens eines drehbar angetriebenen Kreissägeblattes (15), bei dem der Schallpegel beim Drehen des Kreissägeblattes (15) erfasst und einer Auswerteeinheit zugeführt und wobei die Vorschubgeschwindigkeit (Vs) der Werkstücke (1) überwacht wird,
**dadurch gekennzeichnet, dass** eine für den jeweils durchzuführenden Sägevorgang prozesssichere Vorschubgeschwindigkeit anhand gespeicherter Erfahrungswerte ermittelt und ausgewählt wird, dass beim Sägevorgang mit der prozesssicheren Vorschubgeschwindigkeit der Schallpegel unterhalb eines kritischen Grenzwertes bleibt, dass die Vorschubgeschwindigkeit des Werkstückes verringert wird, wenn sich der Schallpegel diesem Grenzwert nähert oder ihn erreicht, und dass die Vorschubgeschwindigkeit des Werkstückes (1) wieder erhöht wird, sobald der Istwert des Schallpegels unter den vorgegebenen Grenzwert-Schallpegel fällt.

2. Verfahren nach Anspruch 1,
**dadurch gekennzeichnet, dass** die gespeicherten Erfahrungswerte die Vorschubgeschwindigkeit und/oder die Kreissägeblatt-Dicke und/oder der Schallpegel sind.

3. Verfahren nach Anspruch 1 oder 2,
**dadurch gekennzeichnet, dass** die gespeicherten Erfahrungswerte die Werkstückart und/oder die Zähnezahl des Kreissägeblattes (15) und/oder die Drehzahl des Kreissägeblattes (15) sind.

4. Verfahren nach einem der Ansprüche 1 bis 3,
**dadurch gekennzeichnet, dass** zunächst ein Referenzwert des Schallpegels ermittelt wird, von dem ausgehend der Grenzwert des Schallpegels festgelegt wird.

5. Verfahren nach einem der Ansprüche 1 bis 4,
**dadurch gekennzeichnet, dass** die Drehzahl des Kreissägeblattes (15) zumindest bei Annäherung an den Grenzwert des Schallpegels verändert wird.

6. Verfahren nach einem der Ansprüche 1 bis 5,
**dadurch gekennzeichnet, dass** der Referenzwert und der Grenzwert des Schallpegels in einem Speicher bzw. in einer Datenbank abgelegt sind.

7. Verfahren nach einem der Ansprüche 1 bis 6,
**dadurch gekennzeichnet, dass** die Vorschubgeschwindigkeit (Vs) der Werkstücke (1) und/oder die Drehzahl des Sägeblattes (15) stufenlos oder schrittweise veränderbar sind.

8. Verfahren nach einem der Ansprüche 1 bis 7,
**dadurch gekennzeichnet, dass** der Referenzwert des Schallpegels des Kreissägeblattes (15) automatisch ermittelt und abgespeichert wird.

9. Verfahren nach einem der Ansprüche 1 bis 8,
**dadurch gekennzeichnet, dass** die Vorschubgeschwindigkeit (Vs) der Werkstücke (1) automatisch verändert wird.

10. Verfahren nach einem der Ansprüche 1 bis 9,
**dadurch gekennzeichnet, dass** der Grenzwert des Schallpegels in Abhängigkeit vom Referenzwert automatisch ermittelt wird, und dass vorzugsweise ein weiterer Grenzwert zur Aktivierung einer Warnmeldung verwendet wird.

11. Bearbeitungsmaschine zur Durchführung des Verfahrens nach einem der Ansprüche 1 bis 10, mit wenigstens einem Kreissägeblatt (5), in dessen Schallbereich wenigstens ein Schallaufnehmer (21) angeordnet ist, der die aufgenommenen Schallpegelsignale einer Auswerteeinheit zuführt, und mit wenigstens einem Speicher, in dem Erfahrungswerte von Grenzwerten des Schallpegels abgelegt sind, auf welche die Auswerteeinheit Zugriff hat,
**dadurch gekennzeichnet, dass** im Speicher Erfahrungswerte hinsichtlich der Vorschubgeschwindigkeit (Vs) abgelegt sind, dass die Auswerteeinheit Teil einer Steuerung (22) der Bearbeitungsmaschine ist, und dass die Steuerung Zugriff auf die gespeicherten Erfahrungswerte hat, dass die Steuerung (22) eine für den jeweils durchzuführenden Sägevorgang prozesssichere Vorschubgeschwindigkeit (Vₛ) anhand der gespeicherten Erfahrungswerte so ermittelt und auswählt, dass der Schallpegel beim Sägevorgang mit der prozesssicheren Vorschubgeschwindigkeit (Vₛ) unterhalb einem kritischen Grenzwertes bleibt, dass die Steuerung (22) die Vorschubgeschwindigkeit (Vs) des Werkstückes (1) verringert, wenn sich der Schallpegel diesem Grenzwert nähert oder ihn erreicht, und die Vorschubgeschwindigkeit (Vs) wieder erhöht, sobald der Istwert des Schallpegels unter den vorgegeben Grenzwert-Schallpegel fällt.

12. Bearbeitungsmaschine nach Anspruch 11,
**dadurch gekennzeichnet, dass** die Bearbeitungsmaschine eine Kehlmaschine ist, die mindestens ein oberes horizontales Bearbeitungswerkzeug (9), mindestens ein unteres horizontales Bearbeitungswerkzeug (6, 10), mindestens ein rechtes vertikales Bearbeitungswerkzeug (7) und mindestens ein linkes vertikales Bearbeitungswerkzeug (8) aufweist, und dass das Kreissägeblatt (15) vorteilhaft in Transportrichtung (5) der Werkstücke (1) hinter dem letzten Bearbeitungswerkzeug (11) in der Kehlmaschine angeordnet ist.

13. Bearbeitungsmaschine nach Anspruch 11 oder 12,
**dadurch gekennzeichnet, dass** im Datenspeicher weitere Prozess- und Bearbeitungsparameter abgelegt sind.

14. Bearbeitungsmaschine nach einem der Ansprüche 11 bis 13,
**dadurch gekennzeichnet, dass** das Kreissägeblatt (15) Teil wenigstens eines Kreissägepaketes (13, 14) ist.

## Claims

1. Method for cutting elongated workpieces (1) which consist of wood, plastic and the like, by means of at least one rotatably driven circular saw blade (15), in which the sound level is recorded during rotation of the circular saw blade (15) and supplied to an evaluation unit, and wherein the feed rate (V_{S}) of the workpieces (1) is monitored,
**characterized in that** a process-safe feed rate for the sawing process to be carried out is determined and selected on the basis of stored empirical values, that during the sawing process with the process-safe feed rate the sound level remains below a critical limiting value, that the feed rate of the workpiece is reduced when the sound level approaches or reaches this limiting value and that the feed rate of the workpiece (1) is increased again as soon as the actual value of the sound level falls below the predefined limiting-value sound level.

2. Method according to Claim 1,
**characterized in that** the stored empirical values are the feed rate and/or the circular saw blade thickness and/or the sound level.

3. Method according to Claim 1 or 2,
**characterized in that** the stored empirical values are the workpiece type and/or the number of teeth of the circular saw blade (15) and/or the rotational speed of the circular saw blade (15).

4. Method according to one of Claims 1 to 3,
**characterized in that** a reference value of the sound level is firstly determined, from which the limiting value of the sound level is determined.

5. Method according to one of Claims 1 to 4,
**characterized in that** the rotational speed of the circular saw blade (15) is changed at least when approaching the limiting value of the sound level.

6. Method according to one of Claims 1 to 5,
**characterized in that** the reference value and the limiting value of the sound level are stored in a memory or in a database.

7. Method according to one of Claims 1 to 6,
**characterized in that** the feed rate (V_{S}) of the workpieces (1) and/or the rotational speed of the saw blade (15) can be changed continuously or stepwise.

8. Method according to one of Claims 1 to 7,
**characterized in that** the reference value of the sound level of the circular saw blade (15) is automatically determined and stored.

9. Method according to one of Claims 1 to 8,
**characterized in that** the feed rate (V_{S}) of the workpieces (1) is automatically changed.

10. Method according to one of Claims 1 to 9,
**characterized in that** the limiting value of the sound level is determined automatically as a function of the reference value, and that preferably a further limiting value is used to activate a warning message.

11. Processing machine for carrying out the method according to one of Claims 1 to 10, comprising at least one circular saw blade (5), in the sound region whereof at least one sound sensor (21) is arranged, which supplies the recorded sound level signals to an evaluation unit and comprising at least one memory in which empirical values of limiting values of the sound level are stored to which the evaluation unit has access,
**characterized in that** empirical values with regard to the feed rate (V_{S}) are stored in the memory, that the evaluation unit is part of a control (22) of the processing machine and that the control has access to the stored empirical values, that the control (22) determines and selects a process-safe feed rate (V_{S}) for the sawing process to be carried out with reference to the stored empirical values so that the sound level remains below a critical limiting value during the sawing process with the process-safe feed rate (V_{S}), that the control (22) reduces the feed rate (V_{S}) of the workpiece (1) when the sound level approaches or reaches this limiting value and the feed rate (V_{S}) is increased again as soon as the actual value of the sound level falls below the predefined limiting value sound level.

12. Processing machine according to Claim 11,
**characterized in that** the processing machine is a moulding machine having at least one upper horizontal machining tool (9), at least one lower horizontal machining tool (6, 10), at least one right vertical machining tool (7) and at least one left vertical machining tool (8), and that the circular saw blade (15) is advantageously arranged in the transport direction (5) of the workpieces (1) behind the last machining tool (11) in the moulding machine.

13. Processing machine according to Claim 11 or 12,
**characterized in that** further process and processing parameters are stored in the data memory.

14. Processing machine according to one of Claims 11 to 13,
**characterized in that** the circular saw blade (15) is part of at least one circular saw package (13, 14).

## Revendications

1. Procédé, destiné à séparer des pièces à usiner (1) allongées, qui sont constituées en bois, en matière plastique ou analogues au moyen d'au moins une lame de scie circulaire (15) entraînée en rotation, lors duquel l'on détecte le niveau sonore lors de la rotation de la lame de scie circulaire (15) et on l'amène vers une unité d'évaluation et la vitesse d'avance (V_{S}) des pièces à usiner (1) étant supervisée,
**caractérisé en ce qu'**une vitesse d'avance assurant la sécurité de processus pour l'opération de sciage qui doit être respectivement réalisée est déterminée et sélectionnée à l'aide de valeurs empiriques mémorisées, **en ce que** lors de l'opération de sciage à la vitesse d'avance assurant la sécurité de processus, le niveau sonore reste inférieur à une valeur limite critique, en ce la vitesse d'avance de la pièce à usiner se réduit lorsque le niveau sonore se rapproche de ladite valeur limite ou l'atteint et **en ce que** la vitesse d'avance de la pièce à usiner (1) augmente à nouveau dès que la valeur réelle du niveau sonore chute sous la valeur limite prédéfinie du niveau sonore.

2. Procédé selon la revendication 1,
**caractérisé en ce que** les valeurs empiriques mémorisées sont la vitesse d'avance et / ou l'épaisseur de la lame de scie circulaire et / ou le niveau sonore.

3. Procédé selon la revendication 1 ou 2,
**caractérisé en ce que** les valeurs empiriques mémorisées sont le type de pièce à usiner et / ou le nombre de dents de la lame de scie circulaire (15) et / ou la vitesse de rotation de la lame de scie circulaire (15).

4. Procédé selon l'une quelconque des revendications 1 à 3,
**caractérisé en ce qu'**il est déterminé d'abord une valeur de référence pour le niveau sonore, à partir de laquelle la valeur limite du niveau sonore est fixée.

5. Procédé selon l'une quelconque des revendications 1 à 4,
**caractérisé en ce que** la vitesse de rotation de la lame de scie circulaire (15) est modifiée au moins lors de l'approche de la valeur limite du niveau sonore.

6. Procédé selon l'une quelconque des revendications 1 à 5,
**caractérisé en ce que** la valeur de et la valeur limite du niveau sonore sont sauvegardées dans une mémoire ou dans une base de données.

7. Procédé selon l'une quelconque des revendications 1 à 6,
**caractérisé en ce que** la vitesse d'avance (V_{S}) des pièces à usiner (1) et / ou la vitesse de rotation de la lame de scie (15) peuvent être modifiées en continu ou pas-à-pas.

8. Procédé selon l'une quelconque des revendications 1 à 7,
**caractérisé en ce que** la valeur de référence du niveau sonore de la lame de scie circulaire (15) est déterminée et mémorisée automatiquement.

9. Procédé selon l'une quelconque des revendications 1 à 8,
**caractérisé en ce que** la vitesse d'avance (V_{S}) des pièces à usiner (1) est modifiée automatiquement.

10. Procédé selon l'une quelconque des revendications 1 à 9,
**caractérisé en ce que** la valeur limite du niveau sonore est déterminée automatiquement en fonction de la valeur de référence et **en ce que** de préférence, une valeur limite supplémentaire est utilisée pour activer un message d'avertissement.

11. Machine d'usinage, destinée à réaliser le procédé selon l'une quelconque des revendications 1 à 10, pourvue d'au moins une lame de scie circulaire (5), dans la zone sonore de laquelle est placé au moins un capteur acoustique (21), qui amène les signaux de niveau sonore enregistrés vers une unité d'évaluation et pourvue d'au moins une mémoire, dans laquelle sont sauvegardées des valeurs empiriques de valeur limites du niveau sonore, auxquelles l'unité d'évaluation a accès,
**caractérisé en ce que** dans la mémoire sont sauvegardées des valeurs empiriques concernant la vitesse d'avance (V_{S}), **en ce que** l'unité d'évaluation est une partie d'un système de commande (22) de la machine d'usinage et **en ce que** le système de commande a accès aux valeurs empiriques mémorisées, **en ce qu'**à l'aide des valeurs empiriques mémorisées, le système de commande (22) détermine une vitesse d'avance (V_{S}) assurant la sécurité de processus de l'opération de sciage qui doit être respectivement réalisée, **en ce que** lors de l'opération de sciage à la vitesse d'avance (V_{S}) assurant la sécurité de processus, le niveau sonore reste inférieur à valeur limite critique, **en ce que** le système de commande (22) réduit la vitesse d'avance (V_{S}) de la pièce à usiner (1) lorsque le niveau sonore s'approche de ladite valeur limite ou l'atteint et augmente de nouveau la vitesse d'avance (V_{S}) dès que la valeur réelle du niveau sonore chute en-dessous de la valeur limite prédéfinie du niveau sonore.

12. Machine d'usinage selon la revendication 11,
**caractérisé en ce que** la machine d'usinage est une moulurière, qui comporte au moins un outil d'usinage (9) horizontal supérieur, au moins un outil d'usinage (6, 10) horizontal inférieur, au moins un outil d'usinage (7) vertical à droite, au moins un outil d'usinage (8) vertical à gauche et **en ce que** la lame de scie circulaire (15) est placée avantageusement derrière le dernier outil d'usinage (11) dans la direction de transport (5) des pièces à usiner (1) dans la moulurière.

13. Machine d'usinage selon la revendication 11 ou 12,
**caractérisé en ce que** dans la mémoire de données sont sauvegardés des paramètres de processus et d'usinage supplémentaires.

14. Machine d'usinage selon l'une quelconque des revendications 11 à 13,
**caractérisé en ce que** la lame de scie circulaire (15) est une partie d'au moins un pack (13, 14) de scie circulaire.
